# EUROPÄISCHE PATENTSCHRIFT

(11) **EP 3 977 533 B1**
(45) Veröffentlichungstag und Bekanntmachung des Hinweises auf die Patenterteilung: **05.04.2023**
(21) Anmeldenummer: 20719608.0
(22) Anmeldetag: 15.04.2020
(51) Int. Cl.: H01M 10/6556, H01M 10/6561, H01M 10/6567, H01M 10/625, H01M 50/204, H01M 50/227, H01M 50/24, H01M 50/262

(54) **FLUIDTEMPERIERBARE TRAKTIONSBATTERIE UND BATTERIEGEHÄUSEANORDNUNG MIT DURCHFÜHRUNG FÜR WÄRMEÜBERTRAGUNGSEINRICHTUNG**
FLUID-TEMPERATURE-CONTROLLABLE TRACTION BATTERY AND BATTERY HOUSING ASSEMBLY HAVING A FEED-THROUGH FOR A HEAT TRANSMISSION DEVICE
BATTERIE DE TRACTION TEMPÉRÉE PAR FLUIDE ET AGENCEMENT DE BOÎTIER DE BATTERIE AVEC TRAVERSÉE POUR UN SYSTÈME DE TRANSMISSION DE CHALEUR

(30) Priorität: 29.05.2019 DE 102019114445
(43) Veröffentlichungstag der Anmeldung: 06.04.2022
(73) Patentinhaber: Kautex Textron GmbH & Co. KG, 53229 Bonn (DE)
(72) Erfinder: SCHÄFER, Guido, 53332 Bornheim (DE); LIPPERHEIDE, Moritz, 53119 Bonn (DE); ENKIRCH, Georg, 56414 Salz (DE); LENZ, Stefan, 51469 Bergisch Gladbach (DE)
(74) Vertreter: Richly & Ritschel Patentanwälte PartG mbB
(86) Internationale Anmeldenummer: PCT/EP2020/060522
(87) Internationale Veröffentlichungsnummer: WO 2020/239314

(56) Entgegenhaltungen:
- DE-A1-102013 201 129
- DE-A1-102016 001 145
- DE-A1-102017 208 617

## Beschreibung

Die vorliegende Erfindung betrifft eine Batteriegehäuseanordnung, insbesondere als Batteriegehäuseanordnung einer fluidtemperierbaren Traktionsbatterie eines Fahrzeugs, mit einem Batteriegehäuse, das einen Innenraum zur Aufnahme einer Mehrzahl Batteriezellen umschließt; und einer Wärmeübertragungseinrichtung, die ein Einlassrohr, ein Auslassrohr und ein fluidtechnisch dazwischen angeordnetes Wärmetauscherelement aufweist, wobei die Wärmeübertragungseinrichtung von dem Einlassrohr über das Wärmetauscherelement zu dem Auslassrohr von dem Fluid durchflossen werden kann; wobei das Wärmetauscherelement in dem Batteriegehäuse aufnehmbar ist.

Die vorliegende Erfindung betrifft ebenfalls eine fluidtemperierbare Traktionsbatterie mit einer obigen Batteriegehäuseanordnung und einer Mehrzahl Batteriezellen, die in dem Batteriegehäuse der Batteriegehäuseanordnung aufgenommen sind.

Die vorliegende Erfindung betrifft außerdem ein Verfahren zur Herstellung einer obigen Batteriegehäuseanordnung, insbesondere als Batteriegehäuseanordnung einer fluidtemperierbaren Traktionsbatterie eines Fahrzeugs.

Aus dem Stand der Technik sind Batteriegehäuseanordnungen für fluidtemperierbare Traktionsbatterien und entsprechende fluidtemperierbare Traktionsbatterien mit solchen Batteriegehäuseanordnungen bereits in verschiedenen Ausführungen bekannt. Sie müssen einer Mehrzahl von Anforderungen gerecht werden. So sollen die Batteriegehäuseanordnungen darin aufgenommene Batteriezellen und Batteriemodule crashsicher kapseln und gegenüber einer Umgebung abschirmen. Weiter sollen die Batteriegehäuse eine kostengünstige Herstellung einer Traktionsbatterie ermöglichen und zur einfachen Wartung der in der Batteriegehäuseanordnung aufgenommenen Batteriemodule eingerichtet sein.

Zum Temperieren der Traktionsbatterien werden typischerweise Fluide verwendet, also Gase oder vorzugsweise Flüssigkeiten. Dabei kann eine einfache Wärmeübertragung von dem Fluid zu den Batteriezellen oder umgekehrt erfolgen. Alternativ kann auch ein Kältekreislauf vorgesehen sein, in dem das Fluid seinen Aggregatzustand ändert, um Wärme zum Verdampfen eines flüssigen Fluids aufzunehmen oder Wärme beim Kondensieren eines gasförmigen Fluids abzugeben. Dies ermöglicht eine besonders effiziente Temperierung der Traktionsbatterie. Entsprechend kann die Traktionsbatterie bei hohen Temperaturen oder bei Erwärmung im Betrieb gekühlt werden, oder sie kann beispielsweise bei niedrigen Umgebungstemperaturen erwärmt werden.

Im Stand der Technik umfassen diese fluidtemperierbaren Traktionsbatterien und Batteriegehäuseanordnungen für solche Traktionsbatterien üblicherweise ein Batteriegehäuse aus Metall. Bekannte Batteriegehäuse von Traktionsbatterien sind beispielsweise aus geschweißtem oder gepresstem Stahlblech oder Aluminiumguss hergestellt. Zur Montage der Wärmeübertragungseinrichtung und der Durchführung eines Einlasses und eines Auslasses weisen die Batteriegehäuse beispielsweise Verbindungsflansche auf. An einer Innenseite des Batteriegehäuses wird die Wärmeübertragungseinrichtung mit ihrem Einlass und mit ihrem Auslass an die Verbindungsflansche angeschlossen, und an der Außenseite des Batteriegehäuses werden Verbindungsrohre eines Temperierkreislaufs an die Verbindungsflansche angeschlossen. Dies erfordert eine aufwendige Herstellung des Batteriegehäuses mit den Verbindungsflanschen. Dafür sind beispielsweise fein bearbeitete Flächen an dem Batteriegehäuse erforderlich, die typischerweise nur mit einer spanenden Bearbeitung realisiert werden können. Eine Abdichtung kann über Verschraubungen an dem Batteriegehäuse erfolgen. Eine solche Herstellung des Batteriegehäuses ist sehr aufwendig und kostenintensiv. Auch erforderliche Gewindeverschraubungen zur Verbindung mit dem Einlass und dem Auslass der Wärmeübertragungseinrichtung wie auch zum Anschluss der Verbindungsrohre des Temperierkreislaufs erhöhen den Montageaufwand und sind darüber hinaus mit hohen Kosten verbunden. Darüber hinaus können die Montage und der Anschluss der Wärmeübertragungseinrichtung innerhalb des Batteriegehäuses sehr schwierig durchzuführen sein, wenn beispielsweise der Verbindungflansch innerhalb des Batteriegehäuses nur schwer zugänglich ist. Dies erschwert die Herstellung solcher Batteriegehäuseanordnungen und fluidtemperierbarer Traktionsbatterien.

Zunehmend finden Kunststoffe oder Verbundwerkstoffe Verwendung für die Herstellung solcher Batteriegehäuse, da sie gegenüber Metallen beispielsweise ein geringeres Gewicht aufweisen. Die oben genannten Durchführungen sind jedoch für aus Kunststoff oder einem Verbundwerkstoff hergestellte Batteriegehäuse meist ungeeignet.

In diesem Zusammenhang ist aus dem Dokument DE 10 2016 001 145 A1 eine Kraftfahrzeugbatterie, nämlich Traktionsbatterie, bekannt mit einem Batteriegehäuse, wobei das Batteriegehäuse einen Gehäusedeckel und ein mehrere Seitenwände und eine Bodenwand umfassendes Gehäuseunterteil aufweist, mit mehreren Batteriemodulen, die in einem von dem Batteriegehäuse definierten Innenraum aufgenommen sind, mit Kühlplatten, die in dem Innenraum des Batteriegehäuses benachbart zum Gehäusedeckel und damit oberhalb der Batteriemodule sowie benachbart zur Bodenwand des Gehäuseunterteils und damit unterhalb der Batteriemodule aufgenommen sind, und mit einer einen Vorlaufanschluss und einer Rücklaufanschluss bereitstellenden, kühlmittelseitigen Schnittstelle. Die kühlmittelseitige Schnittstelle ist integraler Bestandteil einer Seitenwand des Batteriegehäuses. Die kühlmittelseitige Schnittstelle weist zusätzlich einen vorlaufseitigen Kühlmittelverteiler auf, über den Kühlmittel ausgehend vom Vorlaufanschluss in Richtung auf die oberhalb und unterhalb der Batteriemodule angeordneten Kühlplatten aufteilbar ist. Ferner weist die kühlmittelseitige Schnittstelle zusätzlich einen rücklaufseitigen Kühlmittelzusammenführer auf, über den Kühlmittel ausgehend von den oberhalb und unterhalb der Batteriemodule angeordneten Kühlplatten in Richtung auf den Rücklaufanschluss zusammenführbar ist.

Das Dokument DE 10 2017 208 617 A1 betrifft ein Energiespeichergehäuse mit einem Kühlungsanschluss und einem Kühlmittelverteiler zum Führen von Kühl- oder Kältemittel im Inneren des Energiespeichergehäuses, wobei der Kühlungsanschluss folgende Elemente aufweist: zumindest ein Anschlussrohrstück, welches am Kühlmittelverteiler angebracht ist; zumindest ein Dichtrohrstück, welches eine Wand des Energiespeichergehäuses so durchdringt, dass zwischen dem Dichtrohrstück und einer Wandöffnung ein das Dichtrohrstück umgebender Spalt verbleibt, und einen Aufsatz, mit zumindest einem Aufsatzrohrstück, wobei das Anschlussrohrstück, das Dichtrohrstück und das Aufsatzrohrstück aneinandersetzbare Bauteile sind, die aneinandergesetzt eine Rohrleitung ausbilden, über welche der Kühlmittelverteiler zur Kühl- oder Kältemittelzirkulation von außerhalb des Energiespeichergehäuses erreichbar ist, und wobei der Aufsatz von außen auf das Dichtrohrstück und den Spalt aufsetzbar ist, so dass der Aufsatz den Spalt verschließt.

Dokument DE 10 2013 201 129 A1 betrifft ein Batteriemodul, welches ein Batteriemodulgehäuse, mindestens eine Batteriezelle, welche in dem Batteriemodulgehäuse angeordnet ist, sowie mindestens ein thermisches Element umfasst, welches von einem Fluid durchströmbar ist. Das thermische Element ist dazu ausgebildet, die mindestens eine Batteriezelle in einem vordefinierten Temperaturbereich zu halten. Das thermische Element weist mindestens einen Kanal auf, welcher von dem Fluid durchströmbar ist, wobei der Kanal außerhalb des Batteriemodulgehäuses verläuft.

Davon ausgehend liegt der vorliegenden Erfindung die Aufgabe zugrunde, eine Batteriegehäuseanordnung, eine fluidtemperierbare Traktionsbatterie mit einer solchen Batteriegehäuseanordnung und ein Verfahren zur Herstellung einer solchen Batteriegehäuseanordnung bereitzustellen, die eine einfache Montage und eine Bereitstellung einer Batteriegehäuseanordnung und einer Traktionsbatterie mit kompakten Abmessungen, einer hohen Stabilität sowie einem guten Schutz gegen Umwelteinflüsse und das Eindringen von Verschmutzungen ermöglichen.

Die der vorliegenden Erfindung zugrundeliegende Aufgabe wird durch eine Batteriegehäuseanordnung mit den Merkmalen des Anspruchs 1 gelöst. Vorteilhafte Ausgestaltungen der Batteriegehäuseanordnung sind in den von Anspruch 1 abhängigen Ansprüchen beschrieben.

Im Genaueren wird die der vorliegenden Erfindung zugrundeliegende Aufgabe durch eine Batteriegehäuseanordnung, insbesondere als Batteriegehäuseanordnung einer fluidtemperierbaren Traktionsbatterie eines Fahrzeugs, gelöst, mit einem Batteriegehäuse, das einen Innenraum zur Aufnahme einer Mehrzahl Batteriezellen umschließt; und einer Wärmeübertragungseinrichtung, die ein Einlassrohr, ein Auslassrohr und ein fluidtechnisch dazwischen angeordnetes Wärmetauscherelement aufweist, wobei die Wärmeübertragungseinrichtung von dem Einlassrohr über das Wärmetauscherelement zu dem Auslassrohr von dem Fluid durchflossen werden kann; wobei das Wärmetauscherelement in dem Batteriegehäuse aufnehmbar ist.

Die erfindungsgemäße Batteriegehäuseanordnung ist dadurch gekennzeichnet, dass die Wärmeübertragungseinrichtung mit dem Einlassrohr, dem Auslassrohr und dem Wärmetauscherelement als Einheit ausgeführt ist, das Batteriegehäuse wenigstens eine Durchlassöffnung zur Durchführung des Einlassrohrs und des Auslassrohrs aufweist; und das Batteriegehäuse wenigstens ein Verschlusselement aufweist, das in die wenigstens eine Durchlassöffnung eingesetzt ist und einen Verschluss zwischen dem Einlassrohr und/oder dem Auslassrohr und der wenigstens einen Durchlassöffnung bildet.

Die erfindungsgemäße Batteriegehäuseanordnung und fluidtemperierbare Traktionsbatterie ermöglichen eine einfache Durchführung des Fluids zur Temperierung der Batteriezellen der Traktionsbatterie durch eine Wandung des Batteriegehäuses hindurch. Außerdem ergeben sich verschiedene Vorteile beim Einbau der Wärmeübertragungseinrichtung in dem Batteriegehäuse wie auch bei der Verwendung der Batteriegehäuseanordnung und der damit ausgeführten fluidtemperierbaren Traktionsbatterie. So kann beispielsweise ein Verbindungsflansch in der Wandung des Batteriegehäuses entfallen, da das Einlassrohr und das Auslassrohr aus dem Batteriegehäuse geführt werden. Entsprechend wird die Bearbeitung des Batteriegehäuses vereinfacht. Auch erforderliche Gewindeverschraubungen zum Anschluss der Wärmeübertragungseinrichtung wie auch der Verbindungsrohre des Temperierkreislaufs bei einer Flanschverbindung können entfallen. Solche Gewindeverschraubungen erhöhen den Montageaufwand und sind darüber hinaus mit hohen Kosten verbunden. Auch ist nur ein geringer Bau- bzw. Montageraum in dem Batteriegehäuse erforderlich, da keine Verbindungen des Einlassrohrs bzw. des Auslassrohrs innerhalb des Batteriegehäuses hergestellt werden müssen. Anschlüsse des Einlassrohrs bzw. des Auslassrohrs liegen außerhalb des Batteriegehäuses. Außerhalb des Batteriegehäuses kann eine Verbindung der beiden Rohre mit Verbindungsrohren des Temperierkreislaufs üblicherweise einfach hergestellt werden. Dies ermöglicht insgesamt eine vereinfachte Montage der Wärmeübertragungseinrichtung an bzw. in dem Batteriegehäuse und einen einfachen Anschluss der Wärmeübertragungseinrichtung an den Temperierkreislauf für die Temperierung der Traktionsbatterie des Fahrzeugs. Durch das Durchführen des Einlassrohrs und des Auslassrohrs können durch die Durchlassöffnung wird das Positionieren der Wärmeübertragungseinrichtung in bzw. an dem Batteriegehäuse erleichtert.

Durch den Verschluss des Batteriegehäuses mit dem wenigstens einen Verschlusselement wird nicht nur ein Schutz gegen das Eindringen von Schmutz oder Feuchtigkeit in das Batteriegehäuse erzielt. Zusätzlich wird durch das wenigstens eine Verschlusselement eine Art "schwimmende Lagerung" des Einlassrohrs und/oder des Auslassrohrs in der Durchlassöffnung des Batteriegehäuses realisiert. Dies betrifft prinzipiell eine axiale Richtung des jeweiligen Einlassrohrs bzw. Auslassrohrs, die im Weiteren auch als Durchlassrichtung bezeichnet wird. Alternativ oder zusätzlich kann eine schwimmende Lagerung in radialer Richtung des jeweiligen Einlassrohrs bzw. Auslassrohrs realisiert werden. Somit können Toleranzen zwischen dem Batteriegehäuse und dem Einlassrohr bzw. Auslassrohr ausgeglichen werden. So können beispielsweise unterschiedliche Wärmeausdehnungskoeffizienten des Batteriegehäuses und der Wärmeübertragungseinrichtung ausgeglichen werden, wenn diese aus unterschiedlichen Materialien hergestellt sind. Da die Wärmeübertragungseinrichtung nicht direkt an dem Batteriegehäuse gehalten ist, können auch Toleranzen bei der Montage der Wärmeübertragungseinrichtung in dem Batteriegehäuse einfach kompensiert werden. Weiter kann die Wärmeübertragungseinrichtung mit dem Einlassrohr, dem Auslassrohr und dem Wärmetauscherelement als Einheit zum Anschluss an den Temperierkreislauf bereitgestellt werden, was Zuverlässigkeit und Ausfallsicherheit verbessert und potentielle Undichtigkeiten durch einen Entfall von internen Verbindungen reduziert. Äußere Kräfte wirken außerdem unmittelbar auf das Einlassrohr und das Auslassrohr ein, so dass Beschädigungen an dem Batteriegehäuse vermieden werden können. Trotzdem auftretende Beschädigungen an dem Verschlusselement können einfach durch einen Austausch des Verschlusselements beseitigt werden.

Das Fahrzeug kann ein beliebiges Fahrzeug mit einem elektrischen Antrieb sein, beispielsweise ein rein elektrisch betriebenes Fahrzeug oder ein sogenanntes Hybridfahrzeug mit einem elektrischen und einem weiteren Antrieb, beispielsweise einem Verbrennungsmotor. Anzahl und Anordnung von elektrischen Antriebsmotoren in dem Fahrzeug ist für die vorliegende Erfindung ebenfalls unerheblich.

Das Batteriegehäuse kann auf unterschiedliche Weise ausgeführt sein. Beispielsweise kann das Batteriegehäuse zweiteilig ausgebildet sein mit einer Unterschale und einer Oberschale, so dass das Batteriegehäuse nach dem Einbringen der Batteriezellen verschlossen werden kann, indem vorzugsweise die Oberschale auf die Unterschale aufgesetzt wird. In diesem Fall kann das Batteriegehäuse durch Abnehmen der Oberschale geöffnet werden, um einen Zugriff zu den Batteriezellen zu ermöglichen. Prinzipiell ist auch eine umgekehrte Anbringung möglich.

Die Wärmeübertragungseinrichtung umfasst das Einlassrohr und das Auslassrohr, zwischen denen das Fluid durch das Wärmetauscherelement zirkuliert. Das Wärmetauscherelement dient dazu, Wärme von den Batteriezellen aufzunehmen oder Wärme daran abzugeben, abhängig von einem Betrieb der Wärmeübertragungseinrichtung. Der Betrieb zur Aufnahme bzw. Abgabe von Wärme kann durch entsprechende Zufuhr des Fluids mit einer entsprechenden Ausgangstemperatur eingestellt werden. Dadurch können die Batteriezellen temperiert werden, um einen optimalen Betrieb zu ermöglichen und ihre maximale Speicherkapazität zur Verfügung zu stellen. Prinzipiell können auch mehrere Wärmeübertragungseinrichtungen auf die beschriebene Weise in dem Batteriegehäuse angeordnet sein. Die Wärmeübertragungseinrichtung kann auch nur zum Kühlen oder Wärmen der Batteriezellen verwendet werden, so dass ein besonders einfacher Temperierkreislauf verwendet werden kann. Gleichzeitig kann über die Wärmeübertragungseinrichtung eine homogene Temperaturverteilung der Batteriezellen erreicht werden.

Das Fluid kann ein Gas oder vorzugsweise eine Flüssigkeit mit einer hohen Wärmekapazität sein. Dabei kann die Wärmeübertragung von dem Fluid über das Wärmetauscherelement zu den Batteriezellen oder umgekehrt erfolgen. Alternativ kann auch ein Kältekreislauf vorgesehen sein, in dem das Fluid seinen Aggregatzustand ändert, um Wärme zum Verdampfen aufzunehmen oder Wärme beim Kondensieren abzugeben. Dies ermöglicht eine besonders effiziente Temperierung der Batteriezellen.

Das Wärmetauscherelement ist in dem Innenraum des Batteriegehäuses angeordnet zur Übertragung von Wärme an die Batteriezellen bzw. zur Aufnahme von Wärme von den Batteriezellen. Dazu kann ein Kontaktelement zwischen den Batteriezellen und dem Wärmetauscherelement angeordnet sein. Das Kontaktelement ist in thermischem Kontakt mit dem Wärmetauscherelement und den Batteriezellen. Das Kontaktelement ist typischerweise aus einem Metall mit einer hohen Wärmeleitfähigkeit hergestellt, vorzugsweise aus Aluminium. Das Wärmetauscherelement kann einen oder mehrere rohrartige Fluidkanäle umfassen. Besonders bevorzugt weist der wenigstens eine Fluidkanal einen rechteckigen Querschnitt auf, so dass die Wände des Fluidkanals thermisch gut kontaktiert werden können. Der wenigstens eine Fluidkanal ist typischerweise aus einem Metall mit einer hohen Wärmeleitfähigkeit hergestellt, vorzugsweise aus Aluminium. Mehrere Fluidkanäle können in prinzipiell beliebiger Weise parallel und/oder in Reihe verbunden sein. Ein Fluidkanal oder eine Mehrzahl Fluidkanäle können gemeinsam mäanderförmig ausgeführt bzw. angeordnet sein. Mehrere Fluidkanäle können einzeln angeordnet und miteinander zu dem Wärmetauscherelement verbunden sein, oder vorzugsweise als eine mechanisch fest verbundene Einheit das Wärmetauscherelement bilden.

chDie Wärmeübertragungseinrichtung mit dem Wärmetauscherelement ist vorzugsweise an einer Bodenseite des Batteriegehäuses positioniert, so dass eine Abstützung des Wärmetauscherelements an der Bodenseite erfolgen kann.

Die wenigstens eine Durchlassöffnung zur Durchführung des Einlassrohrs und des Auslassrohrs kann prinzipiell eine beliebige Form aufweisen, wobei eine kreisförmige oder ovale Ausführung bevorzugt ist und den Verschluss des Batteriegehäuses mit dem Verschlusselement erleichtert.

Das wenigstens eine Verschlusselement weist vorzugsweise eine gewisse Elastizität auf, die das Einsetzen in die Durchlassöffnung bei durchgeführtem Einlassrohr und/oder Auslassrohr erleichtert. Das Verschlusselement bewirkt einen Verschluss des Batteriegehäuses gegen ein Eindringen von Fremdkörpern und Feuchtigkeit. Außerdem bewirkt das Verschlusselement vorzugsweise einen thermischen Verschluss des Batteriegehäuses. In einer weiter bevorzugten Ausgestaltung bewirkt das Verschlusselement einen druckdichten Verschluss des Batteriegehäuses.

Das Durchführen des Einlassrohrs und des Auslassrohrs betrifft ein Einfädeln der beiden Rohre in die eine oder mehrere Durchlassöffnungen. Es ist nicht erforderlich, dass das Einlassrohr bzw. das Auslassrohr vollständig durch die jeweilige Durchlassöffnung geführt sind. Das Durchführen des Einlassrohrs und des Auslassrohrs wird dadurch realisiert, dass sowohl das Einlassrohr wie auch das Auslassrohr außerhalb des Batteriegehäuses angeschlossen werden können, beispielsweise an den bereits genannten Temperierkreislauf.

In einer vorteilhaften Ausführungsform weist das Batteriegehäuse eine Durchlassöffnung zur gemeinsamen Durchführung des Einlassrohrs und des Auslassrohrs auf; und das Batteriegehäuse weist ein Verschlusselement auf, das in die Durchlassöffnung eingesetzt ist und einen Verschluss zwischen dem Einlassrohr und/oder dem Auslassrohr sowie der Durchlassöffnung bildet. Das Einlassrohr und das Auslassrohr können dabei separat in der Durchlassöffnung angeordnet sein, so dass das Verschlusselement einen Verschluss zwischen jedem der beiden Rohre und der Durchlassöffnung bildet. Alternativ können das Einlassrohr und das Auslassrohr eine bauliche Einheit bilden. Dabei können das Einlassrohr und das Auslassrohr beispielsweise nebeneinander angeordnet sein. Alternativ können das Einlassrohr und das Auslassrohr koaxial ausgeführt sein, wobei das Einlassrohr das Auslassrohr umgibt oder umgekehrt. In diesem Fall bildet das Verschlusselement einen Verschluss zwischen dem äußeren der beiden Rohre und der Durchlassöffnung.

In einer vorteilhaften Ausführungsform weist das Batteriegehäuse eine Mehrzahl Durchlassöffnungen zur Durchführung des Einlassrohrs und des Auslassrohrs auf; und das Batteriegehäuse weist eine Mehrzahl Verschlusselemente auf, die jeweils in eine Durchlassöffnung eingesetzt sind und einen Verschluss zwischen dem Einlassrohr und einer Durchlassöffnung sowie dem Auslassrohr und einer Durchlassöffnung bilden. Jedes der Rohre ist also individuell durch eine Durchlassöffnung geführt, und jede der Durchlassöffnungen ist mit einem Verschlusselement verschlossen. Prinzipiell können auch mehrere Einlassrohre und mehrere Auslassrohre durch eine entsprechende Mehrzahl Durchlassöffnungen geführt sein. Die mehreren Einlassrohre und Auslassrohre können Teil nur einer Wärmeübertragungseinrichtung sein. Alternativ kann die Batteriegehäuseanordnung eine Mehrzahl Wärmeübertragungseinrichtungen mit jeweils einem Einlassrohr und jeweils einem Auslassrohr umfassen, die jeweils individuell durch eine Durchlassöffnung geführt sind. Darüber hinaus sind auch Kombinationen von Einlassrohren und/oder Auslassrohren in einer Durchlassöffnung möglich, beispielsweise eine Durchlassöffnung, durch die zwei Einlassrohre geführt sind, zusammen mit einer Durchlassöffnung, durch die zwei Auslassrohre geführt sind. Die obigen Ausführungen in Bezug auf die gemeinsame Durchführung von Einlassrohr und Auslassrohr durch eine Durchlassöffnung gelten entsprechend.

In einer vorteilhaften Ausführungsform sind die Mehrzahl Durchlassöffnungen zur Durchführung des Einlassrohrs und des Auslassrohrs an einer Seite des Batteriegehäuses angeordnet; und das Einlassrohr und das Auslassrohr erstrecken sich zu derselben Seite bezogen auf das Wärmetauscherelement, so dass das Einlassrohr und das Auslassrohr gemeinsam durch die Mehrzahl Durchlassöffnungen durchführbar sind. Die Wärmeübertragungseinrichtung kann somit einfach in dem Batteriegehäuse positioniert werden. Eine axiale Bewegung der Wärmeübertragungseinrichtung ermöglicht das Durchführen von Einlassrohr und Auslassrohr durch die Durchlassöffnungen. Die axiale Bewegung der Wärmeübertragungseinrichtung kann beispielsweise mit einer Schwenkbewegung kombiniert werden.

In einer vorteilhaften Ausführungsform ist die wenigstens eine Durchlassöffnung als rohrförmige Durchlassöffnung ausgeführt; und das wenigstens eine Verschlusselement ist als zylinderförmiges Verschlusselement ausgeführt. Die rohrförmige Durchlassöffnung weist somit eine axiale Erstreckung auf, in welche das Verschlusselement eingesetzt werden kann, wodurch eine Abdichtung des Batteriegehäuses erleichtert wird. Das Verschlusselement bildet entsprechend einen zylinderförmigen Stopfen zum Verschluss der Durchlassöffnung über zumindest einen axialen Teilbereich der Durchlassöffnung. Prinzipiell sind beliebige korrespondierende Querschnitte von rohrförmigen Durchlassöffnungen und zylinderförmigen Verschlusselementen möglich, beispielsweise kreisförmige, ovale, rechteckige oder auch frei definierbare Querschnitte.

In einer vorteilhaften Ausführungsform ist das wenigstens eine Verschlusselement als plastisch und/oder elastisch verformbares Verschlusselement ausgeführt, wobei das wenigstens eine Verschlusselement in axialer Richtung bezogen auf eine Durchlassrichtung des Einlassrohrs und/oder des Auslassrohrs verformbar ist, und/oder das wenigstens eine Verschlusselement ist in radialer Richtung bezogen auf eine Durchlassrichtung des Einlassrohrs und/oder des Auslassrohrs verformbar ist. Das wenigstens eine Verschlusselement ist vorzugsweise gummielastisch ausgeführt. Durch die Verformbarkeit des wenigstens einen Verschlusselements kann dieses einfach in die Durchlassöffnung eingesetzt werden und diese zuverlässig verschließen. Toleranzen, die sich bei der Herstellung, bei der Montage oder im Betrieb ergeben, können einfach ausgeglichen werden. Eine elastische Verformung des wenigstens einen Verschlusselements ist besonders vorteilhaft, um das Verschlusselement mehrfach zum Verschluss der Durchlassöffnung zu verwenden. Das wenigstens eine Verschlusselement ist vorzugsweise aus Polypropylen (PP), Ethylen-Propylen-Dien-Monomer (EPDM) oder einer Kombination davon hergestellt.

In einer vorteilhaften Ausführungsform weist das wenigstens eine Verschlusselement ein inneres Ringelement zur Anlage an dem Einlassrohr und/oder dem Auslassrohr und ein äußeres Ringelement zur Anlage an der Durchlassöffnung auf; und das innere Ringelement und das äußere Ringelement sind über ein insbesondere V-förmiges Verbindungselement miteinander verbunden. Das äußere Ringelement ermöglicht eine zuverlässige Abdichtung an der Durchlassöffnung, während das innere Ringelement eine zuverlässige Abdichtung an dem Einlassrohr und/oder dem Auslassrohr ermöglicht. Die Abdichtung kann über einen axialen Bereich der Ringelemente hergestellt werden, so dass punktuelle Beeinträchtigungen des jeweiligen Ringelements die Dichtwirkung insgesamt nicht aufheben können. Die Ringelemente ermöglichen eine zuverlässige Anbringung des Verschlusselements in der Durchlassöffnung bzw. an dem Einlassrohr und/oder dem Auslassrohr. Durch eine V-förmige Ausgestaltung des Verbindungselements können die beiden Ringelement sowohl in radialer Richtung wie auch in axialer Richtung beweglich zueinander sein, wodurch ein Toleranzausgleich mit dem Verschlusselement einfach realisiert werden kann. Vorzugsweise weisen das innere und das äußere Ringelement eine höhere Festigkeit als das Verbindungselement auf. Entsprechend weist das Verbindungselement gegenüber den Ringelementen eine höhere Elastizität auf. Dadurch wird der Toleranzausgleich weiter vereinfacht, während die Ringelemente basierend auf ihrer höheren Festigkeit zuverlässig in der Durchlassöffnung bzw. an dem Einlassrohr und/oder dem Auslassrohr positioniert werden können. Inneres und äußeres Ringelement sind vorzugsweise konzentrisch angeordnet. Besonders bevorzugt ist das Verschlusselement mit zwei Komponenten ausgeführt, besonders bevorzugt als zwei-Komponenten Spritzgussbauteil. Dadurch können unterschiedliche Eigenschaften der Ringelemente und des Verbindungselements einfach realisiert werden, und das Verschlusselement ist einfach herstellbar.

In einer vorteilhaften Ausführungsform sind an der wenigstens einen Durchlassöffnung und dem wenigstens einen Verschlusselement korrespondierende Arretierungselemente ausgebildet, um das wenigstens eine Verschlusselement in der wenigstens einen Durchlassöffnung zu arretieren; und/oder an dem wenigstens einen Verschlusselement und dem Einlassrohr und/oder dem Auslassrohr sind korrespondierende Arretierungselemente ausgebildet, um das wenigstens eine Verschlusselement an dem Einlassrohr und/oder dem Auslassrohr zu arretieren. Die Arretierungselemente ermöglichen eine zuverlässige Montage des Verschlusselements in der Durchlassöffnung bzw. an dem Einlassrohr und/oder dem Auslassrohr, so dass ein zuverlässiger Verschluss des Batteriegehäuses erzielt werden kann. Vorzugsweise sind die korrespondierenden Arretierungselemente derart ausgeführt, dass die Arretierung aufhebbar ist, beispielsweise um das Verschlusselement einfach aus der entsprechenden Durchlassöffnung entfernen zu können. Die korrespondierenden Arretierungselemente sind beispielsweise mit einem Eingriffselement und einer Aussparung ausgeführt. Die korrespondierenden Arretierungselemente sind vorzugsweise ausgeführt, eine ineinandergreifende Verrastung zu bewirken oder eine Clipsverbindung herzustellen. Das Herstellen der Verrastung bzw. der Clipsverbindung ermöglicht eine akustische Kontrolle der Montage des wenigstens einen Verschlusselements. Vorzugsweise sind die Arretierungselemente bezogen auf das Batteriegehäuse außenseitig angeordnet, so dass sie einfach zugänglich sind. Dadurch kann eine einfache Prüfung der korrekten Montage des jeweiligen Verschlusselements erfolgen, beispielsweise durch eine optische oder haptische Prüfung. In einer bevorzugten Ausgestaltung sind die korrespondierenden Arretierungselemente mit einer manuellen Entriegelungsfunktion, beispielsweise über eine Bedienfläche, ausgeführt.

In einer vorteilhaften Ausführungsform ist zwischen der wenigstens einen Durchlassöffnung und dem wenigstens einen Verschlusselement ein Dichtelement angeordnet, das vorzugsweise in einer Ringnut des Verschlusselements positioniert ist; und/oder zwischen dem wenigstens einen Verschlusselement und dem Einlassrohr und/oder dem Auslassrohr ist ein Dichtelement angeordnet, das vorzugsweise in einer Ringnut des Einlassrohrs und/oder des Auslassrohrs positioniert ist. Das Dichtelement bewirkt jeweils eine besonders zuverlässige Abdichtung des Verschlusselements an der wenigstens einen Durchlassöffnung bzw. an dem Einlassrohr und/oder dem Auslassrohr. Dadurch ist das verschlossene Batteriegehäuse zuverlässig gegen ein Eindringen beispielsweise von Feuchtigkeit geschützt. Die Aufnahme des jeweiligen Dichtelements in der Ringnut ermöglicht eine zuverlässige Positionierung des Dichtelements. Vorzugsweise sind zwischen der wenigstens einen Durchlassöffnung und dem wenigstens einen Verschlusselement und/oder zwischen dem wenigstens einen Verschlusselement sowie dem Einlassrohr und/oder dem Auslassrohr jeweils mehrere Dichtelemente angeordnet. Besonders bevorzugt sind die mehreren Dichtelemente in axialer Richtung beabstandet angeordnet. In einer weiteren, bevorzugten Ausgestaltung ist das Verschlusselement integral mit dem jeweiligen Dichtelement ausgeführt. Dabei ist das Verschlusselement besonders bevorzugt als zwei-Komponenten Spritzgussbauteil ausgeführt, so dass das Verschlusselement als solches andere Eigenschaften als das Dichtelement aufweisen kann, insbesondere im Bereich des Dichtelements. Insbesondere kann das jeweilige Dichtelement eine hohe Elastizität aufweisen, um eine gute Abdichtung zu ermöglichen.

In einer vorteilhaften Ausführungsform ist das Batteriegehäuse als Kunststoffgehäuse ausgeführt. Dadurch kann das Batteriegehäuse mit einem geringen Gewicht hergestellt werden. Das Batteriegehäuse ist bevorzugt in einem Spritzgussverfahren hergestellt. Das Batteriegehäuse kann einteilig oder mit mehreren separaten Teilen hergestellt sein. Durch die einfache Anbringung des Wärmetauscherelements in dem Batteriegehäuse kann eine einfach herzustellende Gehäuseform realisiert werden. Dabei kann beispielsweise ein Verzicht auf Hinterschnitte erfolgen. Insgesamt kann dadurch die Herstellung des Batteriegehäuses mit Werkzeugen mit einer möglichst geringen Werkzeugkomplexität erfolgen. Alternativ kann das Batteriegehäuse beispielsweise aus Metall oder einem Verbundwerkstoff gefertigt sein.

In einer vorteilhaften Ausführungsform ist das Batteriegehäuse zweiteilig mit einer Oberschale und einer Unterschale ausgeführt, wobei die wenigstens eine Durchlassöffnung vorzugsweise in der Unterschale ausgebildet ist. Die Bereitstellung des Batteriegehäuses mit einer Oberschale und einer Unterschale ermöglicht eine einfache Montage der Traktionsbatterie, indem die Wärmeübertragungseinrichtung und die Batteriezellen zunächst in bzw. an der Unterschale montiert werden. Anschließend kann das Batteriegehäuse durch Aufsetzen der Oberschale verschlossen werden. Die Oberschale dient dabei als Deckel. Durch Abnehmen der Oberschale kann ein einfacher Zugriff auf die Wärmeübertragungseinrichtung und die Batteriezellen zum Austausch oder auch zu Wartungszwecken realisiert werden.

In einer vorteilhaften Ausführungsform ist die Wärmeübertragungseinrichtung insgesamt als starre Einheit ausgeführt, wodurch Schnittstellen oder flexible Schlauchabschnitte innerhalb der Wärmeübertragungseinrichtung vermieden werden. Der Verzicht auf Schnittstellen und flexible Schlauchabschnitte erhöht die Zuverlässigkeit und Ausfallsicherheit und reduziert die Gefahr potentieller Undichtigkeiten.

In einer vorteilhaften Ausführungsform ist die Wärmeübertragungseinrichtung zusätzlich einteilig ausgeführt. Dadurch werden die Ausfallsicherheit verbessert und die Gefahr potentieller Undichtigkeiten reduziert.

Die der vorliegenden Erfindung zugrundeliegende Aufgabe wird weiterhin durch eine fluidtemperierbare Traktionsbatterie mit den Merkmalen des Anspruchs 13 gelöst.

Im Detail wird die erfindungsgemäße Aufgabe somit auch durch eine fluidtemperierbare Traktionsbatterie mit einer obigen Batteriegehäuseanordnung und einer Mehrzahl Batteriezellen, die in dem Batteriegehäuse der Batteriegehäuseanordnung aufgenommen sind, gelöst. Die obigen Ausführungen in Bezug auf Vorteile und Ausgestaltungsformen der Batteriegehäuseanordnung gelten entsprechend für die fluidtemperierbare Traktionsbatterie mit dieser Batteriegehäuseanordnung.

Die der vorliegenden Erfindung zugrundeliegende Aufgabe wird außerdem durch ein Verfahren zur Herstellung einer Batteriegehäuseanordnung den Merkmalen des Anspruchs 14 gelöst.

Vorteilhafte Ausgestaltungen des Verfahrens sind in den von Anspruch 14 abhängigen Ansprüchen beschrieben.

Die Lösung der erfindungsgemäßen Aufgabe erfolgt somit außerdem durch ein Verfahren zur Herstellung einer Batteriegehäuseanordnung nach einem der vorhergehenden Ansprüche 1 bis 12, insbesondere als Batteriegehäuseanordnung einer fluidtemperierbaren Traktionsbatterie eines Fahrzeugs, umfassend die Schritte Bereitstellen eines Batteriegehäuses, das einen Innenraum zur Aufnahme einer Mehrzahl Batteriezellen umschließt; Positionieren einer Wärmeübertragungseinrichtung, die ein Einlassrohr, ein Auslassrohr und ein fluidtechnisch dazwischen angeordnetes Wärmetauscherelement aufweist, wobei die Wärmeübertragungseinrichtung von dem Einlassrohr über das Wärmetauscherelement zu dem Auslassrohr von dem Fluid durchflossen werden kann, in dem Innenraum des Batteriegehäuses; Durchführen des Einlassrohrs und des Auslassrohrs durch die wenigstens eine Durchlassöffnung von einer Innenseite des Batteriegehäuses; und Verschließen des Batteriegehäuses mit wenigstens einem Verschlusselement, das einen Verschluss zwischen dem Einlassrohr und/oder dem Auslassrohr und der wenigstens einen Durchlassöffnung bildet.

Die obigen Ausführungen in Bezug auf Vorteile und Ausgestaltungsformen der fluidtemperierbaren Traktionsbatterie und der Batteriegehäuseanordnung können entsprechend mit dem Verfahren zur Herstellung einer solchen Batteriegehäuseanordnung erzielt werden.

Das erfindungsgemäße Verfahren ermöglicht eine einfache Montage der Wärmeübertragungseinrichtung, indem Einlass- und Auslassrohr durch die wenigstens Durchlassöffnung geführt ("eingefädelt") werden, sodass das Wärmetauscherelement einfach und komfortabel in dem Batteriegehäuse positioniert werden kann. Die Verbindung der Wärmeübertragungseinrichtung, beispielsweise mit dem Temperierkreislauf der Traktionsbatterie des Fahrzeugs, kann im Anschluss an die finale Positionierung erfolgen, und zwar insbesondere von der Außenseite des Batteriegehäuses. Dies erleichtert eine einfache, fehler- und spannungsfreie Montage und Verbindung des Wärmetauscherelements sowie der Wärmeübertragungseinrichtung insgesamt.

Bei dem Verfahren können insbesondere die Schritte zum Positionieren der Wärmeübertragungseinrichtung und zum Durchführen des Einlassrohrs und des Auslassrohrs durch die wenigstens eine Durchlassöffnung in beliebiger Reihenfolge erfolgen. Auch können das Positionieren der Wärmeübertragungseinrichtung und das Durchführen des Einlassrohrs und des Auslassrohrs in einem gemeinsamen Schritt oder einer Sequenz aus einer Mehrzahl abwechselnder Teilschritte erfolgen.

In einer vorteilhaften Ausführungsform umfasst das Verschließen des Batteriegehäuses mit wenigstens einem Verschlusselement ein Aufschieben des wenigstens Verschlusselements auf das Einlassrohr und/oder das Auslassrohr und ein Einschieben des wenigstens einen Verschlusselements in die wenigstens eine Durchlassöffnung von einer Außenseite des Batteriegehäuses auf dem Einlassrohr und/oder dem Auslassrohr. Das Verschließen der Durchlassöffnung ist somit unabhängig von der Positionierung und sogar von der Anbringung und/oder Verbindung der Wärmeübertragungseinrichtung. Beispielsweise kann das Verschlusselement zunächst auf das Einlassrohr und/oder das Auslassrohr aufgeschoben und erst zu einem späteren Zeitpunkt auf dem Einlassrohr und/oder dem Auslassrohr in die Durchlassöffnung geschoben werden, um diese zu verschließen. Entsprechend können auch zunächst das Einlassrohr und/oder das Auslassrohr an einen Temperierkreislauf angeschlossen werden, und das Verschließen der wenigstens einen Durchlassöffnung mit dem wenigstens einen Verschlusselement kann im Anschluss daran erfolgen.

In einer vorteilhaften Ausführungsform umfasst das Durchführen des Einlassrohrs und des Auslassrohrs durch die wenigstens eine Durchlassöffnung von einer Innenseite des Batteriegehäuses ein Anstellen der Wärmeübertragungseinrichtung, so dass das Einlassrohr und das Auslassrohr schräg zu einer Durchlassrichtung der wenigstens einen Durchlassöffnung angeordnet sind, und ein Verschwenken der Wärmeübertragungseinrichtung in ihre Endposition, wobei das Einlassrohr und das Auslassrohr in der Endposition parallel zu der Durchlassrichtung in der wenigstens einen Durchlassöffnung angeordnet sind. Dadurch kann das Wärmetauscherelement Abmessungen aufweisen, die denen des Batteriegehäuses beispielsweise an seiner Bodenwandung näherungsweise entsprechen, und trotzdem einfach und komfortabel positioniert und montiert werden.

Weitere Vorteile, Einzelheiten und Merkmale der Erfindung ergeben sich nachfolgend aus dem erläuterten Ausführungsbeispiel. Dabei zeigen im Einzelnen:
- Figur 1:: eine räumliche Darstellung einer erfindungsgemäßen Batteriegehäuseanordnung einer fluidtemperierbaren Traktionsbatterie eines Fahrzeugs mit einer Unterschale eines Batteriegehäuses und einer Wärmeübertragungseinrichtung gemäß einer ersten, bevorzugten Ausführungsform der vorliegenden Erfindung;
- Figur 2:: eine räumliche Darstellung eines Teilbereichs der Bodenwanne aus Fig. 1 mit Durchlassöffnungen und darin angeordnetem Einlassrohr und Auslassrohr der Wärmeübertragungseinrichtung aus Fig. 1 sowie zwischen dem Einlassrohr bzw. dem Auslassrohr und der jeweiligen Durchlassöffnung angeordneten Verschlusselementen;
- Figur 3:: eine räumliche Darstellung eines Teilbereichs der Bodenwanne aus Fig. 1 mit einem Schnitt durch die Durchlassöffnung des Auslassrohrs mit dem Verschlusselement im nicht in der Durchlassöffnung eingeführten Zustand;
- Figur 4:: eine räumliche Darstellung eines Teilbereichs der Bodenwanne in Übereinstimmung mit Fig. 3, wobei das Verschlusselement in Abweichung zu Fig. 3 in die Durchlassöffnung des Auslassrohrs eingeführt ist;
- Figur 5:: eine räumliche Detailansicht der Durchlassöffnung des Auslassrohrs mit dem darin eingesetzten Verschlusselement in Übereinstimmung mit Fig. 4 mit einem horizontalen Schnitt; und
- Figur 6:: eine räumliche Detailansicht der Durchlassöffnung des Auslassrohrs mit dem darin eingesetzten Verschlusselement in Übereinstimmung mit Fig. 5 von einer entgegengesetzten Seite.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird.

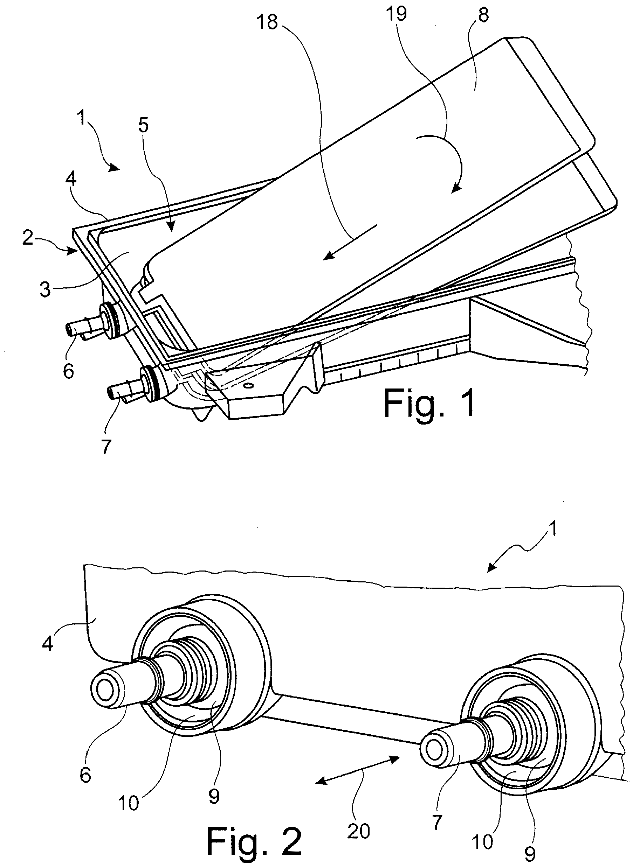

Figuren 1 bis 6 betreffen eine Batteriegehäuseanordnung 1 gemäß einer ersten, bevorzugten Ausführungsform. Die Batteriegehäuseanordnung 1 ist Teil einer fluidtemperierbaren Traktionsbatterie eines Fahrzeugs.

Die Batteriegehäuseanordnung 1 umfasst ein Batteriegehäuse 2, das einen Innenraum 3 zur Aufnahme einer Mehrzahl hier nicht dargestellter Batteriezellen zur Bildung der fluidtemperierbaren Traktionsbatterie umschließt. Das Batteriegehäuse 2 ist zweiteilig ausgebildet mit einer Unterschale 4 und einer hier ebenfalls nicht dargestellten Oberschale, die auf die Unterschale 4 aufgesetzt wird, um den Innenraum 3 zu verschließen. In diesem Ausführungsbeispiel ist das Batteriegehäuse 2 als Kunststoffgehäuse ausgeführt und in einem Spritzgussverfahren hergestellt. Dabei sind die Oberschale und die Unterschale 4 als separate Teile hergestellt. Alternativ kann das Batteriegehäuse 2 beispielsweise aus Metall oder einem Verbundwerkstoff gefertigt sein.

Batteriegehäuseanordnung 1 umfasst außerdem eine Wärmeübertragungseinrichtung 5, die ein Einlassrohr 6, ein Auslassrohr 7 und ein fluidtechnisch dazwischen angeordnetes Wärmetauscherelement 8 aufweist. Die Wärmeübertragungseinrichtung 5 kann von dem Einlassrohr 6 über das Wärmetauscherelement 8 zu dem Auslassrohr 7 von einem Fluid durchflossen werden. Das Wärmetauscherelement 8 ist im fertig montierten Zustand in dem Innenraum 3 des Batteriegehäuses 2 aufgenommen. Die Wärmeübertragungseinrichtung 5 mit dem Wärmetauscherelement 8 ist zur Positionierung an einer Bodenseite des Batteriegehäuses 2 innerhalb der Unterschale 4 ausgeführt. In dieser Position stützt sich das Wärmetauscherelement 8 innenseitig an der Unterschale 4 ab.

Das Wärmetauscherelement 8 dient dazu, Wärme von den Batteriezellen aufzunehmen oder Wärme an diese abzugeben, abhängig von einem Betrieb der Wärmeübertragungseinrichtung 5 zum Kühlen oder Erwärmen der Batteriezellen. Das Wärmetauscherelement 8 umfasst einen oder mehrere rohrartige Fluidkanäle, die vorzugsweise einen rechteckigen Querschnitt aufweisen. Der Fluidkanal bzw. die Fluidkanäle sind typischerweise aus einem Metall mit einer hohen Wärmeleitfähigkeit hergestellt, vorzugsweise aus Aluminium. Mehrere Fluidkanäle können in prinzipiell beliebiger Weise parallel und/oder in Reihe verbunden sein. Ein Fluidkanal oder eine Mehrzahl Fluidkanäle können gemeinsam mäanderförmig ausgeführt bzw. angeordnet sein. Mehrere Fluidkanäle sind vorzugsweise als mechanisch fest verbundene Einheit ausgeführt, die das Wärmetauscherelement 8 bilden. Der Betrieb zur Aufnahme bzw. Abgabe von Wärme kann durch entsprechende Zufuhr des Fluids mit einer entsprechenden Temperatur eingestellt werden.

Darüber hinaus ist die Wärmeübertragungseinrichtung 5 mit dem Wärmetauscherelement 8, dem Einlassrohr 6 und dem Auslassrohr 7 insgesamt als starre Einheit ausgeführt. Zusätzlich ist die Wärmeübertragungseinrichtung 5 in diesem Ausführungsbeispiel einteilig ausgeführt.

Dabei erstrecken sich das Einlassrohr 6 und das Auslassrohr 7 zu derselben Seite bezogen auf das Wärmetauscherelement 8.

Das Fluid kann ein Gas oder vorzugsweise eine Flüssigkeit sein. Dabei kann die Wärmeübertragung von dem Fluid über das Wärmetauscherelement 8 zu den Batteriezellen oder umgekehrt erfolgen. Alternativ kann auch ein Kältekreislauf vorgesehen sein, in dem das Fluid seinen Aggregatzustand ändert, um Wärme zum Verdampfen aufzunehmen oder Wärme beim Kondensieren abzugeben.

Das Batteriegehäuse 5 weist zwei Durchlassöffnungen 9 zur Durchführung des Einlassrohrs 6 und des Auslassrohrs 7 auf. Die Durchlassöffnungen 9 sind in der Unterschale 8 ausgebildet. Die zwei Durchlassöffnungen 9 sind als rohrförmige Durchlassöffnungen 9 mit einer kreisförmigen Form ausgeführt. Damit weisen die beiden rohrförmigen Durchlassöffnungen 9 jeweils eine axiale Erstreckung auf. Im Detail sind die zwei Durchlassöffnungen 9 zur Durchführung des Einlassrohrs 6 und des Auslassrohrs 7 an derselben Seite des Batteriegehäuses 2 angeordnet. Außerhalb des Batteriegehäuses 2 kann eine Verbindung der Wärmeübertragungseinrichtung 5 mit hier nicht dargestellten Verbindungsrohren des Temperierkreislaufs einfach hergestellt werden. Das Einlassrohr 6 und das Auslassrohr 7 werden dazu entsprechend mit den Verbindungsrohren des Temperierkreislaufs verbunden.

Wie in Figur 2 dargestellt ist, weist das Batteriegehäuse 2 zwei Verschlusselemente 10 auf, die in die zwei Durchlassöffnungen 9 eingesetzt sind und einen Verschluss zwischen dem Einlassrohr 6 bzw. dem Auslassrohr 7 und jeweils einer der Durchlassöffnungen 9 bilden. Jedes der Rohre 6, 7 ist also individuell durch eine Durchlassöffnung 9 geführt, und jede der Durchlassöffnungen 9 ist mit einem Verschlusselement 10 verschlossen. Die Verschlusselemente 10 bewirken einen Verschluss des Batteriegehäuses 2 gegen ein Eindringen von Fremdkörpern und Feuchtigkeit.

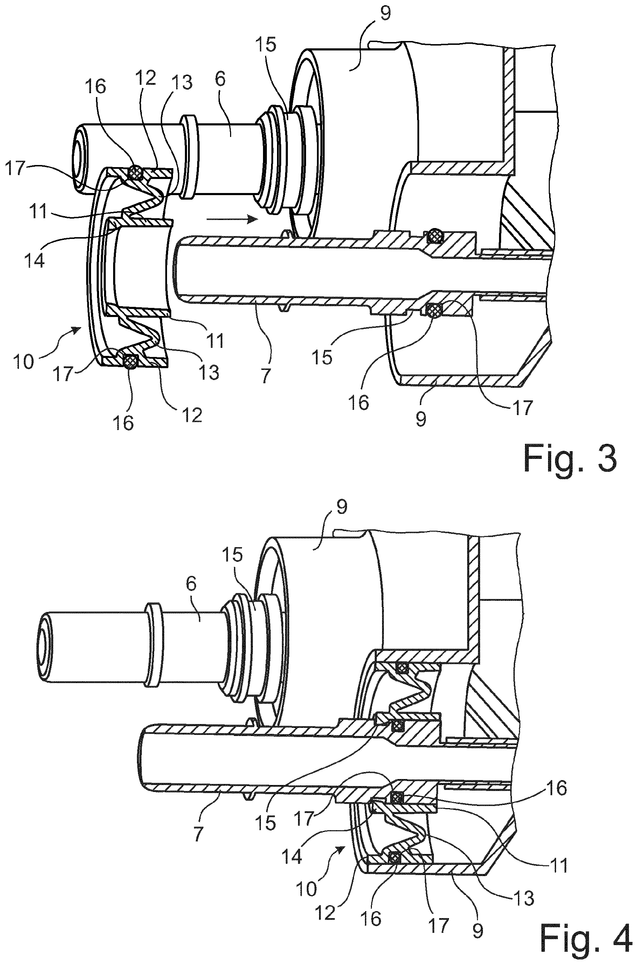

Wie sich aus den Figuren 3 bis 5 ergibt, weist jedes der Verschlusselemente 10 ein inneres Ringelement 11 zur Anlage an dem Einlassrohr 6 bzw. dem Auslassrohr 7 auf. Außerdem weist jedes der Verschlusselemente 10 ein äußeres Ringelement 12 zur Anlage an der jeweiligen Durchlassöffnung 9 auf. Das innere Ringelement 11 und das äußere Ringelement 12 sind über ein V-förmiges Verbindungselement 13 miteinander verbunden. Das äußere Ringelement 12 ist koaxial zu dem inneren Ringelement 11 angeordnet.

Durch die Ringelemente 11, 12 weisen die Verschlusselemente 10 eine zylinderförmige Form auf, so dass sie in die rohrförmigen Durchlassöffnungen 9 eingesetzt werden können, um diese zuverlässig zu verschließen. Die Verschlusselemente 10 bilden somit zylinderförmige Stopfen zum Verschluss der jeweiligen Durchlassöffnung 9.

Die Verschlusselemente 10 sind in diesem Ausführungsbeispiel als zwei-Komponenten Spritzgussbauteile ausgeführt, und aus Polypropylen (PP), Ethylen-Propylen-Dien-Monomer (EPDM) oder einer Kombination davon hergestellt. Durch die Verwendung von zwei unterschiedlichen Komponenten weisen das innere und das äußere Ringelement 11, 12 eine höhere Festigkeit als das Verbindungselement 13 auf. Entsprechend weist das Verbindungselement 13 gegenüber den Ringelementen 11, 12 eine höhere Elastizität auf. Dadurch weisen die Verschlusselemente 10 insgesamt eine gewisse Elastizität auf, die das Einsetzen in die Durchlassöffnungen 9 bei durchgeführtem Einlassrohr 6 bzw. Auslassrohr 7 erleichtert. Die Verschlusselemente 10 sind plastisch und/oder elastisch verformbar. Die Verformbarkeit ergibt sich in axialer Richtung bezogen auf eine Durchlassrichtung 20 des Einlassrohrs 6 bzw. des Auslassrohrs 7 und in radialer Richtung bezogen auf die Durchlassrichtung 20.

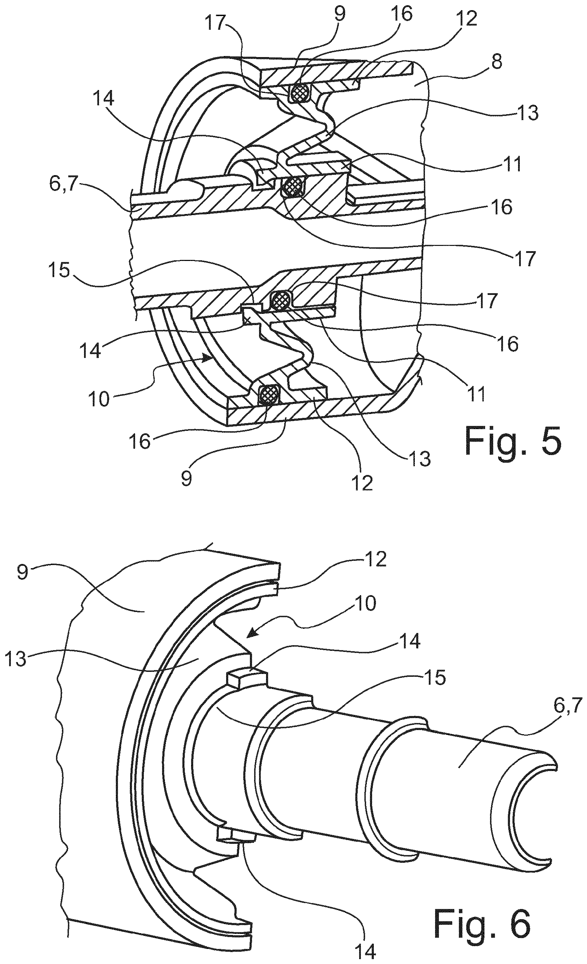

Wie insbesondere in Figur 6 dargestellt ist, sind an den inneren Ringelementen 11 der Verschlusselemente 10 und dem Einlassrohr 6 sowie dem Auslassrohr 7 jeweils korrespondierende Arretierungselemente 14, 15 ausgebildet, um die Verschlusselemente 10 an dem Einlassrohr 6 bzw. dem Auslassrohr 7 zu arretieren. Die korrespondierenden Arretierungselemente 14, 15 sind in diesem Ausführungsbeispiel mit einem Eingriffselement 14, das an dem inneren Ringelement 11 des Verschlusselements 10 ausgebildet ist, und einer Aussparung 15, die in dem Einlassrohr 6 bzw. dem Auslassrohr 7 ausgebildet ist, ausgeführt. Die die Arretierungselemente 14, 15 sind bezogen auf das Batteriegehäuse 2 außenseitig angeordnet.

Die korrespondierenden Arretierungselemente 14, 15 bewirken eine ineinandergreifende Verrastung zwischen dem jeweiligen Verschlusselement 10 und dem Einlassrohr 6 bzw. dem Auslassrohr 7. Die korrespondierenden Arretierungselemente 14, 15 sind so ausgestaltet, dass beim Herstellen der Verrastung eine akustische Rückmeldung zur Kontrolle der Montage des jeweiligen Verschlusselements 10 auf dem Einlassrohr 6 bzw. dem Auslassrohr 7 erfolgt. Außerdem sind die korrespondierenden Arretierungselemente 14, 15 derart ausgeführt, dass die Arretierung aufhebbar ist. Dazu muss lediglich das Eingriffselement 14 aus der Aussparung 15 entfernt werden.

Wie sich weiter aus den Figuren 3 bis 5 ergibt, ist zwischen jeder der Durchlassöffnungen 9 und dem jeweiligen Verschlusselement 10 ein Dichtelement 16 angeordnet, das in einer Ringnut 17 des Verschlusselements 10 positioniert ist. Im Detail ist die Ringnut 17 des Verschlusselements 10 in dem äußeren Ringelement 12 angeordnet. Das Dichtelement 16 ist als Dichtring ausgeführt und in der Ringnut 17 in dem äußeren Ringelement 12 positioniert.

Wie sich wieder aus den Figuren 3 bis 5 ergibt, ist auch zwischen jedem der Verschlusselemente 10 und dem Einlassrohr 6 bzw. dem Auslassrohr 7 ein Dichtelement 16 angeordnet, das in einer Ringnut 17 des Einlassrohrs 6 bzw. des Auslassrohrs 7 positioniert ist. Das Dichtelement 16 ist als Dichtring ausgeführt und in der Ringnut 17 des Einlassrohrs 6 bzw. des Auslassrohrs 7 positioniert. Die Dichtelemente 16 weisen eine hohe Elastizität auf, um eine gute Abdichtung zwischen dem Verschlusselement 10 und der Durchlassöffnung 9 sowie zwischen dem Verschlusselement 10 und dem Einlassrohr 6 bzw. dem Auslassrohr 7 zu erzielen.

Nachstehend wird ein Verfahren zur Herstellung der oben beschriebenen Batteriegehäuseanordnung 1 im Detail beschrieben.

Das Verfahren beginnt mit dem Bereitstellen des Batteriegehäuses 2 zur Aufnahme der Mehrzahl Batteriezellen in dem umschlossenen Innenraum 3.

Im Anschluss wird die Wärmeübertragungseinrichtung 5 in dem Innenraum 3 des Batteriegehäuses 2 positioniert. Wie in Figur 1 dargestellt ist, wird die Wärmeübertragungseinrichtung 5 dabei zunächst schräg in dem Batteriegehäuses 2 angestellt. Dadurch sind das Einlassrohr 6 und das Auslassrohr 7 schräg zu der Durchlassrichtung 20 der beiden Durchlassöffnungen 9 angeordnet.

Davon ausgehend erfolgt das Durchführen des Einlassrohrs 6 und des Auslassrohrs 7 durch die beiden Durchlassöffnungen 9 von einer Innenseite des Batteriegehäuses 2. Dazu wird die Wärmeübertragungseinrichtung 5 aus der angestellten Position in Schieberichtung 18 derart bewegt, dass das Einlassrohr 6 und das Auslassrohr 7 gemeinsam in die beiden Durchlassöffnungen 9 eingesetzt und durchgeführt werden.

Weiter wird die Wärmeübertragungseinrichtung 5 in ihre Endposition, in der das Einlassrohr 6 und das Auslassrohr 7 parallel zu der Durchlassrichtung 20 in den Durchlassöffnungen 9 angeordnet sind, entlang Schwenkrichtung 19 verschwenkt. Zusätzlich kann die Wärmeübertragungseinrichtung 5 mit den Einlassrohr 6 und dem Auslassrohr 7 in Schieberichtung 18 weiter durch die Durchlassöffnungen 9 geführt werden. In der Endposition ist das Wärmetauscherelement 8 an der Bodenseite des Batteriegehäuses 2 positioniert, so dass eine Abstützung des Wärmetauscherelements 8 an der Bodenseite erfolgt. Der so erreichte Zustand ist in Figur 3 gezeigt.

Abschließend wird das Batteriegehäuses 2 mit den beiden Verschlusselementen 10 verschlossen. Es wird ein Verschluss zwischen dem Einlassrohr 6 bzw. dem Auslassrohr 7 und der jeweiligen Durchlassöffnung 9 gebildet. Dazu werden die beiden Verschlusselemente 10 auf das Einlassrohr 6 bzw. das Auslassrohr 7 entsprechend aufgeschoben und entlang des Einlassrohrs 6 bzw. des Auslassrohrs 7 von einer Außenseite des Batteriegehäuses 2 in die entsprechende Durchlassöffnung 9 eingeschoben, bis die Eingriffselemente 14 der Verschlusselemente 10 in die Aussparungen 15 des Einlassrohrs 6 bzw. des Auslassrohrs 7 einrasten.

### Bezugszeichenliste

- 1: Batteriegehäuseanordnung
- 2: Batteriegehäuse
- 3: Innenraum
- 4: Unterschale
- 5: Wärmeübertragungseinrichtung
- 6: Einlassrohr
- 7: Auslassrohr
- 8: Wärmetauscherelement
- 9: Durchlassöffnung
- 10: Verschlusselement
- 11: inneres Ringelement
- 12: äußeres Ringelement
- 13: Verbindungselement
- 14: Eingriffselement, Arretierungselement
- 15: Aussparung, Arretierungselement
- 16: Dichtelement
- 17: Ringnut
- 18: Schieberichtung
- 19: Schwenkrichtung
- 20: Durchlassrichtung

## Patentansprüche

1. Batteriegehäuseanordnung (1), insbesondere als Batteriegehäuseanordnung einer fluidtemperierbaren Traktionsbatterie eines Fahrzeugs, mit
- einem Batteriegehäuse (2), das einen Innenraum (3) zur Aufnahme einer Mehrzahl Batteriezellen umschließt; und
- einer Wärmeübertragungseinrichtung (5), die ein Einlassrohr (6), ein Auslassrohr (7) und ein fluidtechnisch dazwischen angeordnete Wärmetauscherelement (8) aufweist, wobei die Wärmeübertragungseinrichtung (5) von dem Einlassrohr (6) über das Wärmetauscherelement (8) zu dem Auslassrohr (7) von dem Fluid durchflossen werden kann; wobei
- das Wärmetauscherelement (5) in dem Batteriegehäuse (2) aufnehmbar ist; und
die Batteriegehäuseanordnung **dadurch gekennzeichnet ist, dass**
- die Wärmeübertragungseinrichtung (5) mit dem Einlassrohr (6), dem Auslassrohr (7) und dem Wärmetauscherelement (8) als Einheit ausgeführt ist,
- das Batteriegehäuse (2) wenigstens eine Durchlassöffnung (9) zur Durchführung des Einlassrohrs (6) und des Auslassrohrs (7) aufweist; und
- das Batteriegehäuse (2) wenigstens ein Verschlusselement (10) aufweist, das in die wenigstens eine Durchlassöffnung (9) eingesetzt ist und einen Verschluss zwischen dem Einlassrohr (6) und/oder dem Auslassrohr (7) und der wenigstens einen Durchlassöffnung (9) bildet.

2. Batteriegehäuseanordnung (1) nach Anspruch 1, **dadurch gekennzeichnet, dass**
- das Batteriegehäuse (2) eine Durchlassöffnung (9) zur gemeinsamen Durchführung des Einlassrohrs (6) und des Auslassrohrs (7) aufweist; und
- das Batteriegehäuse (2) ein Verschlusselement (10) aufweist, das in die Durchlassöffnung (9) eingesetzt ist und einen Verschluss zwischen dem Einlassrohr (6) und/oder dem Auslassrohr (7) und der wenigstens einen Durchlassöffnung (9) bildet.

3. Batteriegehäuseanordnung (1) nach einem der Ansprüche 1 oder 2, **dadurch gekennzeichnet, dass**
- das Batteriegehäuse (2) eine Mehrzahl Durchlassöffnungen (9) zur Durchführung des Einlassrohrs (6) und des Auslassrohrs (7) aufweist; und
- das Batteriegehäuse (2) eine Mehrzahl Verschlusselemente (10) aufweist, die jeweils in eine Durchlassöffnung (9) eingesetzt sind und einen Verschluss zwischen dem Einlassrohr (6) und einer Durchlassöffnung (9) sowie dem Auslassrohr (7) und einer Durchlassöffnung (9) bilden.

4. Batteriegehäuseanordnung (1) nach Anspruch 3, **dadurch gekennzeichnet, dass**
- die Mehrzahl Durchlassöffnungen (9) zur Durchführung des Einlassrohrs (6) und des Auslassrohrs (7) an einer Seite des Batteriegehäuses (2) angeordnet sind; und
- das Einlassrohr (6) und das Auslassrohr (7) sich zu derselben Seite bezogen auf das Wärmetauscherelement (8) erstrecken, so dass das Einlassrohr (6) und das Auslassrohr (7) gemeinsam durch die Mehrzahl Durchlassöffnungen (9) durchführbar sind.

5. Batteriegehäuseanordnung (1) nach einem der vorhergehenden Ansprüche, **dadurch gekennzeichnet, dass**
- die wenigstens eine Durchlassöffnung (9) als rohrförmige Durchlassöffnung (9) ausgeführt ist; und
- das wenigstens eine Verschlusselement (10) als zylinderförmiges Verschlusselement (10) ausgeführt ist.

6. Batteriegehäuseanordnung (1) nach einem der vorhergehenden Ansprüchen, **dadurch gekennzeichnet, dass**
- das wenigstens eine Verschlusselement (10) als plastisch und/oder elastisch verformbares Verschlusselement (10) ausgeführt ist, wobei
- das wenigstens eine Verschlusselement (10) in axialer Richtung bezogen auf eine Durchlassrichtung (20) des Einlassrohrs (6) und/oder des Auslassrohrs (7) verformbar ist, und/oder
- das wenigstens eine Verschlusselement (10) in radialer Richtung bezogen auf eine Durchlassrichtung (20) des Einlassrohrs (6) und/oder des Auslassrohrs (7) verformbar ist.

7. Batteriegehäuseanordnung (1) nach einem der vorhergehenden Ansprüche, **dadurch gekennzeichnet, dass**
- das wenigstens eine Verschlusselement (10) ein inneres Ringelement (11) zur Anlage an dem Einlassrohr (6) und/oder dem Auslassrohr (7) und ein äußeres Ringelement (12) zur Anlage an der Durchlassöffnung (9) aufweist; und
- das innere Ringelement (11) und das äußere Ringelement (12) über ein insbesondere V-förmiges Verbindungselement (13) miteinander verbunden sind.

8. Batteriegehäuseanordnung (1) nach einem der vorhergehenden Ansprüche, **dadurch gekennzeichnet, dass**
- an der wenigstens einen Durchlassöffnung (9) und dem wenigstens einen Verschlusselement (10) korrespondierende Arretierungselemente (14, 15) ausgebildet sind, um das wenigstens eine Verschlusselement (10) in der wenigstens einen Durchlassöffnung (9) zu arretieren; und/oder
- an dem wenigstens einen Verschlusselement (10) und dem Einlassrohr (6) und/oder dem Auslassrohr (7) korrespondierende Arretierungselemente (14, 15) ausgebildet sind, um das wenigstens eine Verschlusselement (10) an dem Einlassrohr (6) und/oder dem Auslassrohr (7) zu arretieren.

9. Batteriegehäuseanordnung (1) nach einem der vorhergehenden Ansprüche, **dadurch gekennzeichnet, dass**
- zwischen der wenigstens einen Durchlassöffnung (9) und dem wenigstens einen Verschlusselement (10) ein Dichtelement (16) angeordnet ist, das vorzugsweise in einer Ringnut (17) des Verschlusselements (10) positioniert ist; und/oder
- zwischen dem wenigstens einen Verschlusselement (10) und dem Einlassrohr (6) und/oder dem Auslassrohr (7) ein Dichtelement (16) angeordnet ist, das vorzugsweise in einer Ringnut (17) des Einlassrohrs (6) und/oder des Auslassrohrs (7) positioniert ist.

10. Batteriegehäuseanordnung (1) nach einem der vorhergehenden Ansprüche, **dadurch gekennzeichnet, dass**
- das Batteriegehäuse (2) als Kunststoffgehäuse ausgeführt ist.

11. Batteriegehäuseanordnung (1) nach einem der vorhergehenden Ansprüche, **dadurch gekennzeichnet, dass**
- das Batteriegehäuse (2) zweiteilig mit einer Oberschale und einer Unterschale (4) ausgeführt ist, wobei die wenigstens eine Durchlassöffnung (9) vorzugsweise in der Unterschale (4) ausgebildet ist.

12. Batteriegehäuseanordnung (1) nach einem der vorhergehenden Ansprüche, **dadurch gekennzeichnet, dass**
- die Wärmeübertragungseinrichtung (5) insgesamt als starre Einheit ausgeführt.

13. Fluidtemperierbare Traktionsbatterie mit einer Batteriegehäuseanordnung (1) nach einem der vorhergehenden Ansprüche 1 bis 12 und einer Mehrzahl Batteriezellen, die in dem Batteriegehäuse (2) der Batteriegehäuseanordnung (1) aufgenommen sind.

14. Verfahren zur Herstellung einer Batteriegehäuseanordnung (1) nach einem der vorhergehenden Ansprüche 1 bis 12, insbesondere als Batteriegehäuseanordnung (1) einer fluidtemperierbaren Traktionsbatterie eines Fahrzeugs, umfassend die Schritte
- Bereitstellen eines Batteriegehäuses (2), das einen Innenraum (3) zur Aufnahme einer Mehrzahl Batteriezellen umschließt;
- Positionieren einer als Einheit ausgeführten Wärmeübertragungseinrichtung (5), die ein Einlassrohr (6), ein Auslassrohr (7) und ein fluidtechnisch dazwischen angeordnetes Wärmetauscherelement (8) aufweist, wobei die Wärmeübertragungseinrichtung (6) von dem Einlassrohr (6) über das Wärmetauscherelement (8) zu dem Auslassrohr (7) von dem Fluid durchflossen werden kann, in dem Innenraum (3) des Batteriegehäuses (2);
- Durchführen des Einlassrohrs (6) und des Auslassrohrs (7) durch wenigstens eine Durchlassöffnung (9) des Batteriegehäuses (2) von einer Innenseite des Batteriegehäuses (2); und
- Verschließen des Batteriegehäuses (2) mit wenigstens einem Verschlusselement (10), das einen Verschluss zwischen dem Einlassrohr (6) und/oder dem Auslassrohr (7) und der wenigstens einen Durchlassöffnung (9) bildet.

15. Verfahren nach Anspruch 14, **dadurch gekennzeichnet, dass**
- das Verschließen des Batteriegehäuses (2) mit wenigstens einem Verschlusselement (10) ein Aufschieben des wenigstens Verschlusselements (10) auf das Einlassrohr (6) und/oder das Auslassrohr (7) und ein Einschieben des wenigstens einen Verschlusselements (10) in die wenigstens eine Durchlassöffnung (9) von einer Außenseite des Batteriegehäuses (2) umfasst.

16. Verfahren nach einem der Ansprüche 14 oder 15, **dadurch gekennzeichnet, dass**
- das Durchführen des Einlassrohrs (6) und des Auslassrohrs (7) durch die wenigstens eine Durchlassöffnung (9) von einer Innenseite des Batteriegehäuses (2) ein Anstellen der Wärmeübertragungseinrichtung (5), so dass das Einlassrohr (6) und das Auslassrohr (7) schräg zu einer Durchlassrichtung (20) der wenigstens einen Durchlassöffnung (9) angeordnet sind, und ein Verschwenken der Wärmeübertragungseinrichtung (5) in ihre Endposition umfasst, wobei das Einlassrohr (6) und das Auslassrohr (7) in der Endposition parallel zu der Durchlassrichtung (20) in der wenigstens einen Durchlassöffnung (9) angeordnet sind.

## Claims

1. Battery housing assembly (1), in particular as a battery housing assembly of a vehicle traction battery which can be temperature-controlled by a fluid, comprising
- a battery housing (2) which encloses an interior space (3) for receiving a plurality of battery cells; and
- a heat transmission device (5) which has an inlet tube (6), an outlet tube (7) and a heat exchanger element (8) arranged fluidically therebetween, the fluid being able to flow through the heat transmission device (5) from the inlet tube (6) via the heat exchanger element (8) to the outlet tube (7);
- it being possible for the heat exchanger element (5) to be accommodated in the battery housing (2); and
the battery housing assembly is **characterized in that**
- the heat transmission device (5) is designed as a unit with the inlet tube (6), the outlet tube (7) and the heat exchanger element (8),
- the battery housing (2) has at least one through-opening (9) for the passage of the inlet tube (6) and the outlet tube (7); and
- the battery housing (2) has at least one closure element (10) which is inserted into the at least one through-opening (9) and forms a closure between the inlet tube (6) and/or the outlet tube (7) and the at least one through-opening (9).

2. Battery housing assembly (1) according to claim 1, **characterized in that**
- the battery housing (2) has a through-opening (9) for the joint passage of the inlet tube (6) and the outlet tube (7); and
- the battery housing (2) has a closure element (10) which is inserted into the through-opening (9) and forms a closure between the inlet tube (6) and/or the outlet tube (7) and the at least one through-opening (9).

3. Battery housing assembly (1) according to either claim 1 or claim 2, **characterized in that**
- the battery housing (2) has a plurality of through-openings (9) for the passage of the inlet tube (6) and the outlet tube (7); and
- the battery housing (2) has a plurality of closure elements (10) which are inserted into one through-opening (9) in each case and form a closure between the inlet tube (6) and a through-opening (9) and between the outlet tube (7) and a through-opening (9).

4. Battery housing assembly (1) according to claim 3, **characterized in that**
- the plurality of through-openings (9) for the passage of the inlet tube (6) and the outlet tube (7) are arranged on one side of the battery housing (2); and
- the inlet tube (6) and the outlet tube (7) extend on the same side with respect to the heat exchanger element (8), such that the inlet tube (6) and the outlet tube (7) can be passed through the plurality of through-openings (9) together.

5. Battery housing assembly (1) according to any of the preceding claims, **characterized in that**
- the at least one through-opening (9) is designed as a tubular through-opening (9); and
- the at least one closure element (10) is designed as a cylindrical closure element (10).

6. Battery housing assembly (1) according to any of the preceding claims, **characterized in that**
- the at least one closure element (10) is designed as a plastically and/or elastically deformable closure element (10),
- the at least one closure element (10) being deformable in the axial direction relative to a passage direction (20) of the inlet tube (6) and/or the outlet tube (7), and/or
- the at least one closure element (10) being deformable in the radial direction relative to a passage direction (20) of the inlet tube (6) and/or the outlet tube (7).

7. Battery housing assembly (1) according to any of the preceding claims, **characterized in that**
- the at least one closure element (10) has an inner ring element (11) for resting on the inlet tube (6) and/or the outlet tube (7) and an outer ring element (12) for resting on the through-opening (9); and
- the inner ring element (11) and the outer ring element (12) are connected to one another via an in particular V-shaped connecting element (13).

8. Battery housing assembly (1) according to any of the preceding claims, **characterized in that**
- corresponding locking elements (14, 15) are formed on the at least one through-opening (9) and the at least one closure element (10) in order to lock the at least one closure element (10) in the at least one through-opening (9); and/or
- corresponding locking elements (14, 15) are formed on the at least one closure element (10) and the inlet tube (6) and/or the outlet tube (7) in order to lock the at least one closure element (10) on the inlet tube (6) and/or the outlet tube (7).

9. Battery housing assembly (1) according to any of the preceding claims, **characterized in that**
- a sealing element (16) is arranged between the at least one through-opening (9) and the at least one closure element (10), and is preferably positioned in an annular groove (17) of the closure element (10); and/or
- a sealing element (16) is arranged between the at least one closure element (10) and the inlet tube (6) and/or the outlet tube (7), and is preferably positioned in an annular groove (17) of the inlet tube (6) and/or the outlet tube (7).

10. Battery housing assembly (1) according to any of the preceding claims, **characterized in that**
- the battery housing (2) is designed as a plastics housing.

11. Battery housing assembly (1) according to any of the preceding claims, **characterized in that**
- the battery housing (2) is designed in two parts with an upper shell and a lower shell (4), the at least one through-opening (9) preferably being formed in the lower shell (4).

12. Battery housing assembly (1) according to any of the preceding claims, **characterized in that**
- the heat transmission device (5) is designed as a whole as a rigid unit.

13. Traction battery which can be temperature-controlled by a fluid, comprising a battery housing assembly (1) according to any of the preceding claims 1 to 12 and a plurality of battery cells which are received in the battery housing (2) of the battery housing assembly (1).

14. Method for producing a battery housing assembly (1) according to any of the preceding claims 1 to 12, in particular a battery housing assembly (1) of a vehicle traction battery which can be temperature-controlled by a fluid, comprising the steps of
- providing a battery housing (2) which encloses an interior space (3) for receiving a plurality of battery cells;
- positioning a heat transmission device (5) designed as a unit and which has an inlet tube (6), an outlet tube (7) and a heat exchanger element (8) arranged fluidically therebetween, the fluid being able to flow through the heat transmission device (6) from the inlet tube (6) via the heat exchanger element (8) to the outlet tube (7), in the interior space (3) of the battery housing (2);
- passing the inlet tube (6) and the outlet tube (7) through at least one through-opening (9) of the battery housing (2) from inside the battery housing (2); and
- closing the battery housing (2) by means of at least one closure element (10) which forms a closure between the inlet tube (6) and/or the outlet tube (7) and the at least one through-opening (9).

15. Method according to claim 14, **characterized in that**
- closing the battery housing (2) by means of at least one closure element (10) comprises sliding the at least one closure element (10) onto the inlet tube (6) and/or the outlet tube (7) and inserting the at least one closure element (10) into the at least one through-opening (9) from outside the battery housing (2).

16. Method according to either claim 14 or claim 15, **characterized in that**
- passing the inlet tube (6) and the outlet tube (7) through the at least one through-opening (9) from inside the battery housing (2) comprises adjusting the heat transmission device (5) such that the inlet tube (6) and the outlet tube (7) are arranged at an angle to a passage direction (20) of the at least one through-opening (9), and pivoting the heat transmission device (5) into its end position, the inlet tube (6) and the outlet tube (7) in the end position being arranged parallel to the passage direction (20) in the at least one through-opening (9).

## Revendications

1. Agencement de boîtier de batterie (1), en particulier sous forme d'agencement de boîtier de batterie d'une batterie de traction, pouvant être régulée en température par un fluide, d'un véhicule, comportant
- un boîtier de batterie (2) qui renferme un espace intérieur (3) pour le logement d'une pluralité de cellules de batterie ; et
- un dispositif de transfert de chaleur (5) qui présente un tuyau d'entrée (6), un tuyau de sortie (7) et un élément échangeur de chaleur (8) disposé entre eux selon la technique des fluides, le dispositif de transfert de chaleur (5) pouvant être traversé par le fluide depuis le tuyau d'entrée (6) jusqu'au tuyau de sortie (7) par l'intermédiaire de l'élément échangeur de chaleur (8) ;
- l'élément échangeur de chaleur (5) pouvant être logé dans le boîtier de batterie (2) ; et
l'agencement de boîtier de batterie étant **caractérisé en ce que**
- le dispositif de transfert de chaleur (5) est conçu sous la forme d'une unité comportant le tuyau d'entrée (6), le tuyau de sortie (7) et l'élément échangeur de chaleur (8),
- le boîtier de batterie (2) présente au moins une ouverture de passage (9) pour le passage du tuyau d'entrée (6) et du tuyau de sortie (7) ; et
- le boîtier de batterie (2) présente au moins un élément de fermeture (10) qui est inséré dans l'au moins une ouverture de passage (9) et forme une fermeture entre le tuyau d'entrée (6) et/ou le tuyau de sortie (7) et l'au moins une ouverture de passage (9).

2. Agencement de boîtier de batterie (1) selon la revendication 1, **caractérisé en ce que**
- le boîtier de batterie (2) présente une ouverture de passage (9) pour le passage commun du tuyau d'entrée (6) et du tuyau de sortie (7) ; et
- le boîtier de batterie (2) présente un élément de fermeture (10) qui est inséré dans l'ouverture de passage (9) et forme une fermeture entre le tuyau d'entrée (6) et/ou le tuyau de sortie (7) et l'au moins une ouverture de passage (9).

3. Agencement de boîtier de batterie (1) selon l'une des revendications 1 ou 2, **caractérisé en ce que**
- le boîtier de batterie (2) présente une pluralité d'ouvertures de passage (9) pour le passage du tuyau d'entrée (6) et du tuyau de sortie (7) ; et
- le boîtier de batterie (2) présente une pluralité d'éléments de fermeture (10) qui sont respectivement insérés dans une ouverture de passage (9) et forment une fermeture entre le tuyau d'entrée (6) et une ouverture de passage (9) et le tuyau de sortie (7) et une ouverture de passage (9).

4. Agencement de boîtier de batterie (1) selon la revendication 3, **caractérisé en ce que**
- la pluralité d'ouvertures de passage (9) sont disposées sur un côté du boîtier de batterie (2) pour le passage du tuyau d'entrée (6) et du tuyau de sortie (7) ; et
- le tuyau d'entrée (6) et le tuyau de sortie (7) s'étendent sur le même côté par rapport à l'élément échangeur de chaleur (8), de sorte que le tuyau d'entrée (6) et le tuyau de sortie (7) peuvent être passés ensemble à travers la pluralité d'ouvertures de passage (9).

5. Agencement de boîtier de batterie (1) selon l'une des revendications précédentes, **caractérisé en ce que**
- l'au moins une ouverture de passage (9) est conçue sous forme d'ouverture de passage (9) en forme de tuyau ; et
- l'au moins un élément de fermeture (10) est conçu sous forme d'élément de fermeture (10) en forme de cylindre.

6. Agencement de boîtier de batterie (1) selon l'une des revendications précédentes, **caractérisé en ce que**
- l'au moins un élément de fermeture (10) est conçu sous la forme d'un élément de fermeture (10) pouvant être déformé plastiquement et/ou élastiquement,
- l'au moins un élément de fermeture (10) pouvant être déformé dans la direction axiale par rapport à une direction de passage (20) du tuyau d'entrée (6) et/ou du tuyau de sortie (7), et/ou
- l'au moins un élément de fermeture (10) pouvant être déformé dans la direction radiale par rapport à une direction de passage (20) du tuyau d'entrée (6) et/ou du tuyau de sortie (7).

7. Agencement de boîtier de batterie (1) selon l'une des revendications précédentes, **caractérisé en ce que**
- l'au moins un élément de fermeture (10) présente un élément annulaire intérieur (11) destiné à venir en prise avec le tuyau d'entrée (6) et/ou le tuyau de sortie (7) et un élément annulaire extérieur (12) destiné à venir en prise avec l'ouverture de passage (9) ; et
- l'élément annulaire intérieur (11) et l'élément annulaire extérieur (12) sont reliés l'un à l'autre par l'intermédiaire d'un élément de liaison (13) en particulier en forme de V.

8. Agencement de boîtier de batterie (1) selon l'une des revendications précédentes, **caractérisé en ce que**
- des éléments de verrouillage correspondants (14, 15) sont réalisés au niveau de l'au moins une ouverture de passage (9) et de l'au moins un élément de fermeture (10) afin de verrouiller l'au moins un élément de fermeture (10) dans l'au moins une ouverture de passage (9) ; et/ou
- des éléments de verrouillage correspondants (14, 15) sont réalisés au niveau de l'au moins un élément de fermeture (10) et du tuyau d'entrée (6) et/ou du tuyau de sortie (7) afin de verrouiller l'au moins un élément de fermeture (10) au niveau du tuyau d'entrée (6) et/ou du tuyau de sortie (7).

9. Agencement de boîtier de batterie (1) selon l'une des revendications précédentes, **caractérisé en ce que**
- un élément d'étanchéité (16) est disposé entre l'au moins une ouverture de passage (9) et l'au moins un élément de fermeture (10), lequel élément d'étanchéité est de préférence positionné dans une rainure annulaire (17) de l'élément de fermeture (10) ; et/ou
- un élément d'étanchéité (16) est disposé entre l'au moins un élément de fermeture (10) et le tuyau d'entrée (6) et/ou le tuyau de sortie (7), lequel élément d'étanchéité est positionné de préférence dans une rainure annulaire (17) du tuyau d'entrée (6) et/ou du tuyau de sortie (7).

10. Agencement de boîtier de batterie (1) selon l'une des revendications précédentes, **caractérisé en ce que**
- le boîtier de batterie (2) est conçu sous forme de boîtier en matière plastique.

11. Agencement de boîtier de batterie (1) selon l'une des revendications précédentes, **caractérisé en ce que**
- le boîtier de batterie (2) est conçu en deux parties avec une coque supérieure et une coque inférieure (4), l'au moins une ouverture de passage (9) étant réalisée de préférence dans la coque inférieure (4).

12. Agencement de boîtier de batterie (1) selon l'une des revendications précédentes, **caractérisé en ce que**
- le dispositif de transfert de chaleur (5) est conçu dans son ensemble sous forme d'unité rigide.

13. Batterie de traction pouvant être régulée en température par un fluide, comportant un agencement de boîtier de batterie (1) selon l'une des revendications précédentes 1 à 12 et une pluralité de cellules de batterie qui sont logées dans le boîtier de batterie (2) de l'agencement de boîtier de batterie (1).

14. Procédé de fabrication d'un agencement de boîtier de batterie (1) selon l'une des revendications précédentes 1 à 12, en particulier sous forme d'agencement de boîtier de batterie (1) d'une batterie de traction, pouvant être régulée en température par un fluide, d'un véhicule, comprenant les étapes de
- fourniture d'un boîtier de batterie (2) qui renferme un espace intérieur (3) pour le logement d'une pluralité de cellules de batterie ;
- positionnement d'un dispositif de transfert de chaleur (5) conçu sous forme d'unité, lequel présente un tuyau d'entrée (6), un tuyau de sortie (7) et un élément échangeur de chaleur (8) disposé entre eux selon la technique des fluides, le dispositif de transfert de chaleur (6) pouvant être traversé par le fluide depuis le tuyau d'entrée (6) jusqu'au tuyau de sortie (7) par l'intermédiaire de l'élément échangeur de chaleur (8), dans l'espace intérieur (3) du boîtier de batterie (2) ;
- passage du tuyau d'entrée (6) et du tuyau de sortie (7) à travers au moins une ouverture de passage (9) du boîtier de batterie (2) depuis un côté intérieur du boîtier de batterie (2) ; et
- fermeture du boîtier de batterie (2) à l'aide d'au moins un élément de fermeture (10) qui forme une fermeture entre le tuyau d'entrée (6) et/ou le tuyau de sortie (7) et l'au moins une ouverture de passage (9).

15. Procédé selon la revendication 14, **caractérisé en ce que**
- la fermeture du boîtier de batterie (2) à l'aide de l'au moins un élément de fermeture (10) comprend un coulissement de l'au moins un élément de fermeture (10) sur le tuyau d'entrée (6) et/ou le tuyau de sortie (7) et un coulissement de l'au moins un élément de fermeture (10) dans l'au moins une ouverture de passage (9) depuis un côté extérieur du boîtier de batterie (2).

16. Procédé selon l'une des revendications 14 ou 15, **caractérisé en ce que**
- le passage du tuyau d'entrée (6) et du tuyau de sortie (7) à travers l'au moins une ouverture de passage (9) depuis un côté intérieur du boîtier de batterie (2) comprend un réglage du dispositif de transfert de chaleur (5), de sorte que le tuyau d'entrée (6) et le tuyau de sortie (7) sont disposés obliquement par rapport à une direction de passage (20) de l'au moins une ouverture de passage (9), et un pivotement du dispositif de transfert de chaleur (5) dans sa position finale, le tuyau d'entrée (6) et le tuyau de sortie (7) étant disposés parallèlement à la direction de passage (20) dans l'au moins une ouverture de passage (9) dans la position finale.
